Europäisches Patentamt

European Patent Office

Office européen des brevets

(19)

(11)  **EP 0 564 034 B1**

(12)                              **EUROPEAN PATENT SPECIFICATION**

| | |
|---|---|
| (45) Date of publication and mention of the grant of the patent:<br>**04.06.1997  Bulletin 1997/23** | (51) Int Cl.[6]: **G01D 5/26**, G01L 1/24,<br>G01L 11/00 |

(21) Application number: **93200875.8**

(22) Date of filing: **26.03.1993**

(54) **Process and apparatus for the absolute and independent measurement of mechanical and thermal magnitudes that act simultaneously on an optical fibre**

Verfahren und Anordnung zur absoluten und unabhängigen Messung von mechanischen und thermischen Grössen, die gleichzeitig an einer optischen Faser angreifen

Procédé et appareil de mesure absolue et indépendant des grandeurs mécaniques et thermiques agissant simultanément sur un fibre optique

| | |
|---|---|
| (84) Designated Contracting States:<br>**DE FR GB** | (74) Representative: **Mittler, Enrico et al**<br>**c/o Mittler & C. s.r.l.,**<br>**Viale Lombardia 20**<br>**20131 Milano (IT)** |
| (30) Priority: **01.04.1992  IT   MI920782** | |
| (43) Date of publication of application:<br>**06.10.1993  Bulletin 1993/40** | (56) References cited:<br>**EP-A- 0 377 549          EP-A- 0 493 898** |
| (73) Proprietor: **CISE S.p.A.**<br>**I-20123 Milan (IT)** | • **JOURNAL OF LIGHTWAVE TECHNOLOGY. vol. 8, no. 2, February 1990, NEW YORK US pages 138 - 142 FARAMARZ ET AL 'simultaneous measurement of temperature and strain'** |
| (72) Inventors:<br> • **Gusmeroli, Valeria**<br>   **I-20148 Milano (IT)**<br> • **Martinelli, Mario**<br>   **I-20097 San Donato Milanese (Milano) (IT)** | • **strain'** |

## Description

The present invention relates to a process and an apparatus for the absolute and independent measurement of mechanical and thermal magnitudes that act simultaneously on an optical fibre.

The term interferometric techniques is understood to mean techniques based on the assessment of the phase shift between two components of a beam of light emitted by a source of light and received by a detector.

One possible use of the interferometric technique allows the measurement of magnitudes of different types, such as temperature, deformation and pressure, that act on a sensor optical fibre. In this case the phase shift between the component of the beam of light passing through the sensor optical fibre and that passing through a reference optical fibre shall be measured.

Such measurements are normally of the "incremental" type since the phase is a magnitude of the periodic type with a $2\pi$ module.

A process and a corresponding apparatus is known for making non-incremental, or absolute, interferometric measurements of physical magnitudes.

This process and the corresponding apparatus are described in EP-A-0 501 559 in the name of the same Applicant.

The process provides for the emission of a beam of light by a wide-band source followed by the frequency modulation of the beam of light executed through a pass-band filter centred on a frequency that is made to vary with a predetermined law.

It also provides for the phase shift of the beam of light as a function of the physical magnitude to be measured, obtained through the use of means for the separation and recombination of the beam, and the detection and measurement of the phase shift of the components of the beam of light.

The process described above allows the solution of the problem of the non-incremental measurement of the phase shift between the components of a beam of light that pass through a sensor optical fibre subjected to a physical magnitude and a reference optical fibre, and through the measurement of the phase shift to obtain the measurement of the physical magnitude that acts on the sensor optical fibre.

It is known, however, that a sensor optical fibre is sensitive to both mechanical and thermal magnitudes. In the case wherein both types of physical magnitudes act simultaneously on a sensor optical fibre the known art does not allow to distinguish the relative contributions.

EP-A-0377549 discloses a spectrally selective sensor which interrogates a probe with light of an intensity distributed between two wavelength regions to allow simultaneous determination of the force and temperature distribution on a single optical fibre probe.

Journal of Lighwave Technology, vol. 8, no. 2, February 1990, New York, US, pages 138-142, discloses a dual wavelength technique for interferometric measurement of phase changes in an optical signal, which are caused by temperature change and axial strain in an optical fibre.

The object of the present invention is to accomplish a process and an apparatus for the absolute and independent measurement of mechanical and thermal magnitudes in optical fibre sensors.

According to the invention such object is attained with a process and an apparatus as defined in the independent claims 1 and 3.

To better understand the principle that forms the basis of the process according to the invention let us consider that the dispersion of light is something that is present in all materials and thus also in optical fibres. On its basis the time of propagation tg of a signal in a material depends on the wavelength. Given a geometric path L, the measurement of the time of propagation of a light signal is equivalent to a measurement of optical path Lo=ctg, defined as the length of the path traversed by the signal that is supposed to propagate at the speed of light in a vacuum in the time tg. A measurement of dispersion can be executed through the assessment of the optical path for light signals of different wavelengths and can thus be assessed with a high degree of accuracy by means of absolute interferometric techniques.

The principle of measurement can be summarized as follows. In order to separate thermal effects (summarized hereinafter for the sake of simplicity by a uniform variation in temperature $\Delta T$ acting on the section of sensor optical fibre under examination) from mechanical ones (summarized hereinafter for the sake of simplicity by an elongation $\Delta L$ to which the fibre is subjected) a double measurement of the optical path is executed at two different wavelengths. The measurement of the optical path can be executed with different techniques such as flight time techniques or interferometric techniques. In both cases a measurement is made of a parameter P proportional to the value of the optical path according to a proportionality constant p. Since the measurements of the optical path are made at two different wavelengths, the dispersion shall give rise to a different value of the parameter P.

Given that D is the value of the dispersion of the optical fibre of a given length (defined as $D(\lambda)=dtg(\lambda)/d\lambda$), where $\lambda 1$ and $\lambda 2$ the wavelengths at which the parameter P is measured, $\lambda o$ the reference wavelength equal to the half-sum of $\lambda 1$ and $\lambda 2$, the values of the parameters $P(\lambda 1)$, $P(\lambda 2)$ shall be:

$$P(\lambda 1) = p1 \ c \ (tg(\lambda o)+D(\lambda o)(\lambda 1-\lambda o))$$

$$P(\lambda 2) = p2 \ c \ (tg(\lambda o)-D(\lambda o)(\lambda o-\lambda 2))$$

where p1, p2 are two conversion constants whose value depends on the type of technique adopted for the measurement of the optical path; $ctg(\lambda o)$ and $D(\lambda o)$ are the value of the optical path and of the dispersion at the reference wavelength $\lambda o=(\lambda 1+\lambda 2)/2$. In the case wherein $p1=\pm p2=p$ and $\lambda 1-\lambda o=\lambda o-\lambda 2=\Delta\lambda/2$ the sum and the difference of the parameters P at the wavelengths $\lambda 1$ and $\lambda 2$ allow the assessment of the linear and dispersion terms of the measurement that shall be, respectively:

$$P'/2 = p \; c \; tg(\lambda o) \qquad \text{(linear term)}$$

$$P''/2 = p \; c \; D(\lambda o)\Delta\lambda/2 \qquad \text{(dispersion term)}$$

Since the value of the optical path $ctg(\lambda o)$ and of the disperson $D(\lambda o)$ are sensitive to variations of temperature and to variations of elongation of the fibre the two abovementioned expressions allow one to write a system of two equations for the two unknowns $\Delta T$ and $\Delta L$ of variation of the two parameters. Given:

$$c1 = c \; dtg(\lambda o)/dT$$

$$c2 = c \; dtg(\lambda o)/dL$$

$$c3 = c \; dD(\lambda o)/dT$$

$$c4 = c \; dD(\lambda o)/dL$$

this system becomes:

$$\begin{bmatrix} P' \\ \\ P'' \end{bmatrix} = p \begin{bmatrix} c1 & c2 \\ \\ c3 & c4 \end{bmatrix} \begin{matrix} \Delta T \\ \\ \Delta L \end{matrix}$$

With this system it is always possible to find a solution for every pair of values P' and P'', since the value of the discriminant (c1c4-c2c3) is other than zero. The joint measurement of $P(\lambda 1)$ and $P(\lambda 2)$ thus allows the joint assessment of the physical magnitudes temperature and elongation that act on the sensor optical fibre.

In sum, the principle of the proposed technique is based on the possibility of measuring with the same method of measurement of the optical path both the linear effects and the dispersion effects that contribute to the formation of the delay of propagation of a light signal. For this purpose the measurement is executed at two different wavelengths.

The very high resolution of the measurement is a fundamental aspect of the proposed technique. The measurement of the small dispersive effects can, for example, be executed with interferometric techniques. The techniques of non-incremental interferometric measurements allow an assessment to be made of the time of propagation of a signal by means of the assessment of the variation in the phase shift $\Delta\Phi$ in the presence of a variation $\Delta\lambda$ of the wavelength of a signal near the nominal wavelength $\lambda o$. The measured phase $\Delta\Phi$ is proportional to the optical path in terms of

$$\Delta\Phi= (2\pi\Delta\lambda/\lambda o^2) \; ctg(\lambda o)$$

Non-incremental measurements with a very high resolution can be obtained with the use of wide-spectrum sources (white light). An improvement of the performance over the known techniques for non-incremental interferometric measurements with a white light can be obtained with the following method.

Let us consider a wide-spectrum source with a central emission wavelength $\lambda o$ that illuminates an interferometer with an unbalance $\Delta l$, for example a Michelson interferometer. The interference signal is

$$i = \cos(2\pi\Delta l/\lambda o)$$

If such term is divided into two equal components and filtered through two optical filters with a wavelength $\lambda a$ and $\lambda b$ such as to select two distinct portions of the spectrum of the source near two wavelengths $\lambda b = \lambda o+\Delta\lambda/2$ and $\lambda a = \lambda o-\Delta\lambda/2$, two interference signals shall be available:

$$i = \cos \; (2\pi\Delta l/(\lambda o+\Delta\lambda/2)$$

$$i = \cos \; (2\pi\Delta l/(\lambda o-\Delta\lambda/2)$$

the following is obtained from the difference in phase between the two interferometric signals

$$\Delta\Phi=2\pi(\Delta\lambda /\lambda o^2)\Delta l$$

whence the required value of $\Delta l$. The measurement is not incremental when the following condition obtains

$$\Delta l<(\lambda o^2) /(\Delta\lambda)$$

which is easily obtained with a suitable choice of filters.

When such a condition does not obtain the measurement can be executed by measuring the variation of the optical path to be introduced along one arm of the interferometer so as to maintain constant the phase shift $\Delta\Phi$ of the two signals.

The method of the non-incremental measurement of the phase (optical path) described above can be applied to measurements in optical fibre interferometers. In them a signal emitted by a wide-band source is sent along a measurement optical fibre and along a reference optical fibre through a power divider. The two optical beams from the fibres are then coupled in another power divider and sent to detection photodiodes after passing through respective narrow-band filters. A piezoceramic on the reference fibre provides a carrier for the interferometer and allows a variation of the optical path of the reference fibre to be made (this carrier and the adjustment of the length of the reference optical path can also be made with devices in air, that are external to the guided path in the fibre).

The interference signals at output from the photodiodes are compared in phase. In the presence of external disturbances the difference of optical path $\Delta$Lo between the two fibres varies and induces a variation in the phase of the interference signals. The value of $\Delta$Lo can thus be measured according to what has been said previously.

The abovementioned non-incremental interferometric measurement system can easily be extended to execute simultaneously the measurements of mechanical elongation and temperature with the optical fibre, by means of the assessment of the optical path and of the dispersion value of the fibre. To this end a double measurement of phase shift shall be executed near two wavelengths $\lambda$1 and $\lambda$2 and the measured parameters P($\lambda$1) and P($\lambda$2) shall appear of the shifts. According to the stated technique the interference signal from the wideband source should be filtered through four distinct filters at distinct wavelengths suitably spaced out and the shift signals obtained compared in twos. In actual fact the measurement can be made more simply through the use of only three filters with wavelengths $\lambda$a, $\lambda$b, $\lambda$c, such that $\lambda$b=($\lambda$a-$\Delta\lambda$), $\lambda$c=($\lambda$a+$\Delta\lambda$). Comparing the value of the interferometric phase at a wavelength $\lambda$a with the value at a wavelength $\lambda$b and $\lambda$c the parameters P($\lambda$1) and P($\lambda$2) are obtained at a wavelength of $\lambda$1=$\lambda$o-$\Delta\lambda$/2 and $\lambda$2=$\lambda$o+$\Delta\lambda$/2. In the method described above, starting with these parameters with the coefficients p1=2$\pi\Delta\lambda$/$\lambda$o$^2$ and p2=-2$\pi\Delta\lambda$/$\lambda$o$^2$ it is possible to find the value of the temperature and of the elongation that affect the measurement optical fibre.

The values of $\Delta$T and $\Delta$L found with this technique refer to the reference fibre. If this fibre is kept at constant temperature and deformations during the measurement, the values obtained allow an absolute assessment to be made of the value of elongation of the measurement fibre corrected for the thermal difference to which it has been subjected. If the value of the temperature of the reference fibre is known, the value of the temperature obtained can be used to ascertain the temperature of the reference fibre. In this way the simultaneous measurement of mechanical and thermal events is accomplished as they refer to the optical fibre.

The features of the present invention shall be made more evident by its embodiments illustrated as non-limiting examples in the enclosed drawings, wherein:

Fig. 1 illustrates a preferred embodiment of the apparatus according to the present invention;
Fig. 2 illustrates the complete spectrum of the signal at input to the apparatus and its portions used in the apparatus according to the invention;
Fig. 3 illustrates another embodiment of the apparatus according to the present invention.

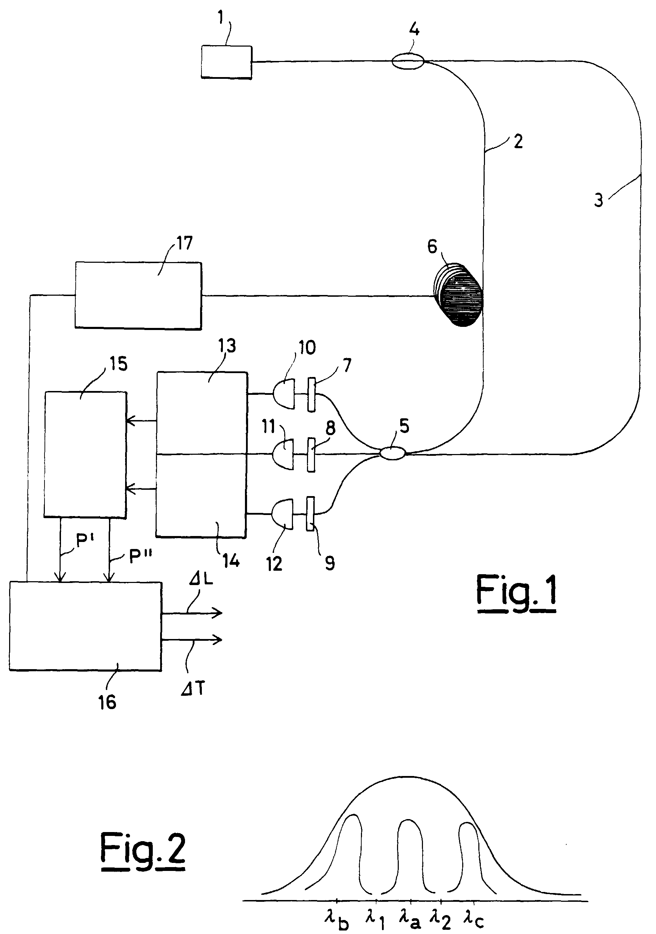

With reference to Fig. 1, the apparatus comprises a source of light 1 with a wide spectrum, a reference optical fibre 2 and a sensor optical fibre 3 coupled by means of input and output couplers 4, 5. There is also a piezoceramic 6 with its respective controller 17 that is used to adjust the length of the reference optical fibre 2 and provides a carrier for the apparatus.

Downstream from the output coupler 5 there are connected a first, a second and a third pass-band optical filters indicated with the reference numbers 7, 8, 9 with respective detector photodiodes 10, 11, 12.

The apparatus also comprises a pair of phase comparators 13, 14 that receive at input the signals at output from the photodiodes 10, 11 and 11, 12.

In succession to the shift comparators 13, 14 there are arranged an adder/subtractor 15 and a processor 16, that operate in the manner described below for obtaining the absolute measurement of two mechanical and thermal physical magnitudes that act simultaneously on the sensor optical fibre 3.

According to this first embodiment, a first and a second absolute interferometric measurement of the signal at output from the sensor optical fibre 3 at a first and at a second wavelength $\lambda$1 and $\lambda$2, to obtain the measurement of dispersion of the optical fibre 3, are executed simultaneously using the filter 8 in combination both with the filter 7 and with the filter 9.

More accurately, the filters 7 and 8 are used with wavelengths $\lambda$b and $\lambda$a that are symmetrical with respect to a first wavelength $\lambda$1 and the filters 8 and 9 are used with wavelengths $\lambda$a and $\lambda$c that are symmetrical with respect to the second wavelength $\lambda$2.

The apparatus of figure 1 works in the following manner. A beam of light emitted by the source 1 is divided, at the optical coupler 4, into two components that pass through the reference optical fibre 2 and the sensor optical fibre 3, respectively.

The length of the sensor optical fibre 3 is fixed, that of the reference optical fibre 2 is adjusted by means of the piezoceramic 6.

The two components from the two optical fibres 2, 3 are made to interfere at the output optical coupler 5 and are then filtered through the filters 7, 8 and 9 that work as described above.

The comparators 13, 14 compare the phases of the signals at output from the photodiodes 10, 11 and 11, 12, respectively, and on the basis of the detected shift, they calculate two parameters P(λ1) and P(λ2). Each of the parameters is equal to the sum of a linear contribution equal to the optical path of the signal in the sensor optical fibre 3 and of a dispersion contribution of the sensor optical fibre 3.

The two parameters P(λ1) and P(λ2) are added and subtracted by an adder/subtractor 15 giving rise to respective linear and dispersion contributions P', P'', that the processor 16 uses to determine the mechanical and thermal magnitudes ΔL and ΔT that act on the sensor optical fibre 3.

Instead of using the filter 8 twice it is possible to provide for the use of a fourth filter. In such case the apparatus would be formed by two pairs of pass-band optical filters and the filtering process of the resultant interference signal would take place, as in the case just illustrated, at respective pairs of wavelengths symmetrical with respect to the first and second wavelength.

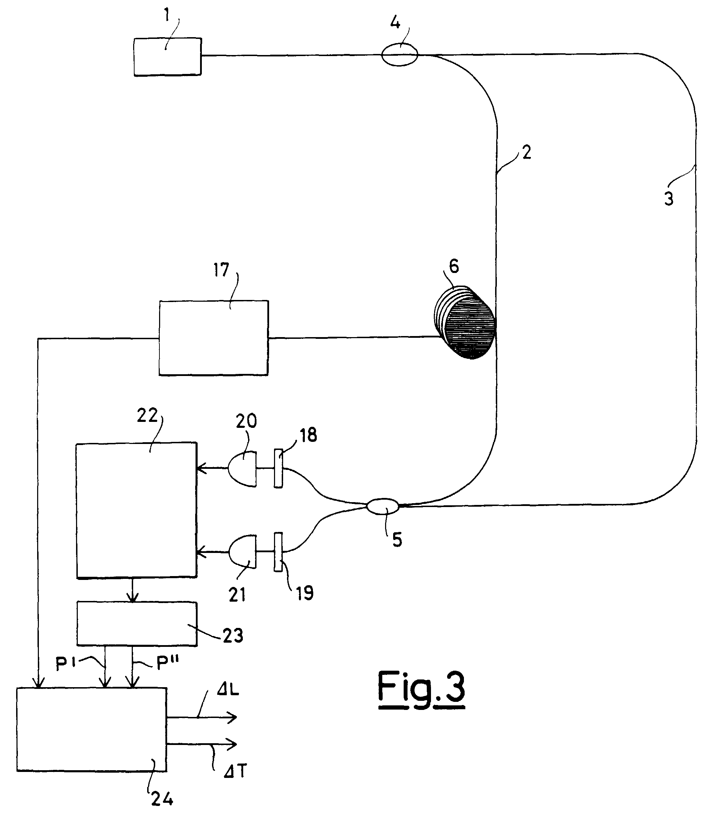

With reference to Fig. 3, another embodiment of the apparatus provides the use of just two filters 18, 19, of which at least one with a variable wavelength, with their photodiodes 20, 21.

The apparatus also comprises a phase comparator 22 that receives at input the output signals from the photodiodes 20 and 21, respectively.

In succession to the shift comparator 22 there are arranged an adder/subtractor 23 and a processor 24, that execute functions altogether similar to those executed by the adder/subtractor 15 and by the processor 16.

The absolute interferometric measurements are in such case executed one after the other in the hypothesis that the mechanical and thermal magnitudes are stationary.

## Claims

1. Process for absolute and independent measurement of two mechanical and thermal magnitudes that act simultaneously on a sensor optical fibre (3) through which an optical signal is passing, characterized in that it comprises:

    a) delivering a wide-band optical signal,
    b) separating said wide-band optical signal into first and second signal components respectively passing through the sensor optical fibre (3) and a reference optical fibre (2) arranged in parallel therewith between input and output optical couplers (4, 5),
    c) causing said first and second signal components to interfere with each other at said output optical coupler (5) to cause an interference output signal,
    d) filtering said interference output signal to obtain filtered signals at different wavelengths and comparing the phases of the filtered signals to obtain first and second parameters at first and second prefixed wavelengths, each parameter including linear and dispersion terms respectively corresponding to the optical path and to the dispersion of the signal component in the sensor optical fibre (3),
    e) summing and subtracting said first and second parameters to separate said linear and dispersion terms, and
    f) processing said linear and dispersion terms to obtain distinct values indicative of the two magnitudes being measured.

2. Process according to claim 1, characterized in that filtering of said interference output signal and phase comparison of the filtered signals are carried out at wavelengths that are symmetrical with respect to said first and second wavelengths.

3. Apparatus for absolute and independent measurement of two mechanical and thermal magnitudes that act simultaneously on a sensor optical fibre (3) through which an optical signal is passing, characterized in that it comprises:

    a) a source (1) of a wide-band optical signal,
    b) a reference optical fibre (2) and a sensor optical fibre (3) connected in parallel between an input optical coupler (4), which, in operation, is supplied with said optical signal and separates it into first and second signal components respectively passing through said reference optical fibre (2) and said sensor optical fibre (3), and an output optical coupler (5) at which, in operation, said signal components are caused to interfere with each other to obtain an interference output signal,
    c) at least two optical filters (7, 8, 9; 18, 19) for filtering said interference output signal at respective wavelengths,
    d) at least one phase comparator (13, 14; 22) for comparing the phases of the filtered signals to obtain first and second parameters at first and second prefixed wavelengths, each parameter including linear and dispersion terms respectively corresponding to the optical path and to the dispersion of the signal component in the sensor optical fibre (3),
    e) an adder/subtractor (15; 23) for summing and subtracting said first and second parameters to separate said linear and dispersion terms, and
    f) a processor (16; 24) for processing said linear and dispersion terms to obtain distinct values indicative of the two magnitudes being measured.

**4.** Apparatus according to claim 3, characterized in that said at least two optical filters (7, 8, 9; 18, 19) comprises three pass-band optical filters (7, 8, 9) operating at respective wavelengths which are two-by-two symmetrical with respect to said first and second prefixed wavelengths.

**5.** Apparatus according to claim 3, characterized in that said at least two optical filters (7, 8, 9; 18, 19) comprises two pairs of pass-band filters operating at respective pairs of wavelengths symmetrical with respect to said first and second prefixed wavelengths.

**Patentansprüche**

**1.** Verfahren zur absoluten und unabhängigen Messung von zwei mechanischen und thermischen Größen, die gleichzeitig auf eine optische Sensor-Faser (3) einwirken, durch welche ein optisches Signal läuft, **dadurch gekennzeichnet**, daß

a) ein optisches Breitbandsignal abgegeben wird,
b) daß das optische Breitbandsignal in erste und zweite Signalkomponenten getrennt wird, die entsprechend durch die optische Sensor-Faser (3) und eine optische Referenz-Faser (2) hindurchlaufen, die parallel mit dieser zwischen optischen Eingangskopplern und Ausgangskopplern (4, 5) angeordnet sind,
c) daß ferner die erste und die zweite Signalkomponente veranlaßt werden, miteinander an dem optischen Ausgangskoppler (5) zu interferieren, um ein Interferenz-Ausgangssignal zu erzeugen,
d) daß das Interferenz-Ausgangssignal gefiltert wird, um gefilterte Signale mit unterschiedlichen Wellenlängen zu erhalten, daß die Phasen der gefilterten Signale verglichen werden, um erste und zweite Parameter mit ersten und zweiten vorgegebenen Wellenlängen zu erhalten, daß jeder Parameter Linear- und Dispersions-Glieder enthält, die entsprechend der optischen Bahn und der Dispersion der Signalkomponente in der optischen Sensor-Faser (3) entsprechen,
e) daß die ersten und zweiten Parameter summiert und subtrahiert werden, um die Linear- und Dispersions-Glieder zu trennen, und
f) daß die Linear-Glieder und die Dispersions-Glieder verarbeitet werden, um bestimmte Werte zu erhalten, welche die beiden gemessenen Größen angeben.

**2.** Verfahren nach Anspruch 1, **dadurch gekennzeichnet**, daß das Filtern des Interferenz-Ausgangssignales und der Phasenvergleich der gefilterten Signale bei Wellenlängen ausgeführt wird, die symmetrisch bezüglich der ersten und der zweiten Wellenlänge sind.

**3.** Vorrichtung zur absoluten und unabhängigen Messung von zwei mechanischen und thermischen Größen, die gleichzeitig auf eine optische Sensor-Faser (3) einwirken, durch welche ein optisches Signal läuft, **gekennzeichnet durch**

a) eine Quellen (1) eines optischen Breitbandsignales,
b) eine optische Referenzfaser (2) und eine optische Sensor-Faser (3), die parallel zwischen einem optischen Eingangskoppler (4), dem im Betrieb das optische Signal zugeführt wird, und der es in erste und zweite Signalkomponenten trennt, welche entsprechend durch die optische Referenz-Faser (2) und die optische Sensor-Faser (3) hindurchlaufen, sowie einem optischen Ausgangskoppler (5) geschaltet sind, in welchem im Betrieb die Signalkomponenten veranlaßt werden, miteinander zu interferieren, um ein Interferenz-Ausgangssignal zu erhalten,
c) wenigstens zwei optische Filter (7, 8, 9; 18, 19) zum Filtern des Interferenz-Ausgangssignales bei entsprechenden Wellenlängen,
d) wenigstens einen Phasen-Komparator (13, 14, 22), zum Vergleichen der Phasen der gefilterten Signale, um erste und zweite Parameter bei ersten und zweiten vorgegebenen Wellenlängen zu erhalten, wobei jeder Parameter Linear- und Dispersions-Glieder enthält, die entsprechend der optischen Bahn und der Dispersion der Signalkomponente in der optischen Sensor-Faser (3) entsprechen,
e) eine Addier/Subtrahier-Schaltung (15, 23) zum Summieren und Subtrahieren der ersten und zweiten Parameter, um die Linear- und die Dispersions-Glieder zu trennen, und durch
f) einen Prozessor (16, 24) zum Verarbeiten dieser Linear- und Dispersions-Glieder, um bestimmte Werte zu erhalten, die die beiden gemessenen Größen anzeigen.

**4.** Vorrichtung nach Anspruch 3, **dadurch gekennzeichnet**, daß wenigstens zwei optische Filter (7, 8, 9; 18, 19) mit drei optischen Band-Paß-Filtern (7, 8, 9) vorgesehen sind, die in entsprechenden Wellenlängen arbeiten, die zwei-mal-zweifach symmetrisch bezüglich der ersten und zweiten vorgegebenen Wellenlänge sind.

**5.** Vorrichtung nach Anspruch 3, **dadurch gekennzeichnet**, daß die wenigstens zwei optischen Filter (7, 8, 9; 18, 19) zwei Paare von Band-Paß-Filtern enthalten, die bei entsprechenden Paaren von Wellenlängen arbeiten, welche symmetrisch bezüglich der ersten und der zweiten vorgegebenen Wellenlänge sind.

## Revendications

1. Procédé pour la mesure absolue et indépendante de deux grandeurs mécanique et thermique qui agissent simultanément sur une fibre optique de capteur (3) à travers laquelle passe un signal optique, caractérisé en ce qu'il comprend les étapes suivantes :

   a) on fournit un signal optique à large bande,
   b) on sépare ce signal optique à large bande pour donner des première et seconde composantes de signal passant respectivement à travers la fibre optique de capteur (3) et une fibre optique de référence (2) disposée parallèlement à la fibre de capteur, entre des coupleurs optiques d'entrée et de sortie (4, 5),
   c) on fait interférer mutuellement les première et seconde composantes de signal dans le coupleur optique de sortie (5), pour produire un signal de sortie d'interférences,
   d) on filtre le signal de sortie d'interférences pour obtenir des signaux filtrés à différentes longueurs d'onde, et on compare les phases des signaux filtrés pour obtenir des premier et second paramètres à des première et seconde longueurs d'onde fixées à l'avance, chaque paramètre comprenant des termes linéaire et de dispersion correspondant respectivement au chemin optique et à la dispersion de la composante de signal dans la fibre optique de capteur (3),
   e) on additionne et on soustrait les premier et second paramètres pour séparer les termes linéaire et de dispersion, et
   f) on traite les termes linéaire et de dispersion pour obtenir des valeurs distinctes représentatives des deux grandeurs qui sont mesurées.

2. Procédé selon la revendication 1, caractérisé en ce que le filtrage du signal de sortie d'interférences et la comparaison de phase des signaux filtrés sont accomplis à des longueurs d'onde qui sont symétriques par rapport aux première et seconde longueurs d'onde.

3. Appareil pour la mesure absolue et indépendante de deux grandeurs mécanique et thermique qui agissent simultanément sur une fibre optique de capteur (3) à travers laquelle passe un signal optique, caractérisé en ce qu'il comprend :

   a) une source (1) d'un signal optique à large bande,
   b) une fibre optique de référence (2) et une fibre optique de capteur (3), connectées en parallèle entre un coupleur optique d'entrée (4), qui, pendant le fonctionnement, reçoit le signal optique et le sépare pour donner des première et seconde composantes de signal qui passent respectivement à travers la fibre optique de référence (2) et la fibre optique de capteur (3), et un coupleur optique de sortie (5) dans lequel, pendant le fonctionnement, on fait interférer mutuellement les composantes de signal pour obtenir un signal de sortie d'interférences,
   c) au moins deux filtres optiques (7, 8, 9; 18, 19) pour filtrer le signal de sortie d'interférences à des longueurs d'onde respectives,
   d) au moins un comparateur de phase (13, 14; 22) pour comparer les phases des signaux filtrés, de façon à obtenir des premier et second paramètres à des première et seconde longueurs d'onde fixées à l'avance, chaque paramètre comprenant des termes linéaire et de dispersion qui correspondent respectivement au chemin optique et à la dispersion de la composante de signal dans la fibre optique de capteur (3),
   e) un additionneur/soustracteur (15; 23) pour additionner et soustraire les premier et second paramètres, de façon à séparer les termes linéaire et de dispersion, et
   f) un processeur (16; 24) pour traiter les termes linéaire et de dispersion, de façon à obtenir des valeurs distinctes représentatives des deux grandeurs qui sont mesurées.

4. Appareil selon la revendication 3, caractérisé en ce que les filtres optiques (7, 8, 9; 18, 19), qui sont au moins au nombre de deux, comprennent trois filtres optiques passe-bande (7, 8, 9) fonctionnant à des longueurs d'onde respectives qui sont symétriques deux à deux par rapport aux première et seconde longueurs d'onde fixées à l'avance.

5. Appareil selon la revendication 3, caractérisé en ce que les filtres optiques (7, 8, 9; 18, 19), qui sont au moins au nombre de deux, comprennent deux paires de filtres passe-bande fonctionnant à des paires de longueurs d'onde respectives qui sont symétriques par rapport aux première et seconde longueurs d'onde fixées à l'avance.

<u>Fig.1</u>

<u>Fig.2</u>

$\lambda_b$ $\lambda_1$ $\lambda_a$ $\lambda_2$ $\lambda_c$

## Fig.3